# EUROPÄISCHE PATENTSCHRIFT

(11) **EP 4 051 548 B1**
(45) Veröffentlichungstag und Bekanntmachung des Hinweises auf die Patenterteilung: **15.01.2025**
(21) Anmeldenummer: 20792360.8
(22) Anmeldetag: 13.10.2020
(51) Int. Cl.: B60T 8/92, B60T 8/17, B60T 8/88, B60T 13/66

(54) **SCHALTVORRICHTUNG FÜR EIN BREMSSYSTEM FÜR EIN FAHRZEUG, BREMSSYSTEM MIT EINER SCHALTVORRICHTUNG UND VERFAHREN ZUM BETREIBEN EINER SCHALTVORRICHTUNG**
SWITCHING DEVICE FOR A BRAKE SYSTEM OF A VEHICLE, BRAKE SYSTEM WITH SAID SWITCHING DEVICE, AND METHOD OF OPERATING OF SAID SWITCHING DEVICE
DISPOSITF COMMUTANT POUR UN SYSTÈME DE FREIN DE VÉHICULE, SYSTÈME DE FREIN AVEC LEDIT DISPOSITIF COMMUTANT, ET MÉTHODE OPÉRATIVE DU DISPOSITF COMMUTANT

(30) Priorität: 30.10.2019 DE 102019129305
(43) Veröffentlichungstag der Anmeldung: 07.09.2022
(73) Patentinhaber: KNORR-BREMSE Systeme für Nutzfahrzeuge GmbH, 80809 München (DE)
(72) Erfinder: BELLING, Michael, 71272 Renningen (DE); KAUFMANN, Christian, 71063 Sindelfingen (DE)
(86) Internationale Anmeldenummer: PCT/EP2020/078712
(87) Internationale Veröffentlichungsnummer: WO 2021/083659

(56) Entgegenhaltungen:
- WO-A1-99/26821
- DE-A1- 102008 029 310

## Beschreibung

Der vorliegende Ansatz bezieht sich auf eine Schaltvorrichtung für ein Bremssystem für ein Fahrzeug, ein Bremssystem mit einer Schaltvorrichtung und ein Verfahren zum Betreiben einer Schaltvorrichtung.

Im Zuge des automatisierten oder autonomen Fahrens von Fahrzeugen aller Art ist es notwendig, Redundanzen zu schaffen. Diese Redundanzen sind so auszulegen, dass das Fahrzeug nicht in einen sicherheitskritischen oder unbeherrschbaren Zustand geraten kann. Redundanzen sind beispielsweise durch eine doppelte Ausführung von Systemen oder eine Verknüpfung mit anderen Systemen, welche ähnliche Funktionen ausführen, möglich. Nach den Vorgaben der Funktionalen Sicherheit ISO26262-2 sind Mikrocontroller von Steuergeräten durch eine externe Instanz zu überwachen. Die DE 10 2008 029 310 A1 offenbart eine Überwachungseinrichtung zur Überwachung von Systemen eines Fahrzeugs. Die WO 99/26821 A1 offenbart ein elektromechanisches Bremssystem.

Vor diesem Hintergrund ist es die Aufgabe des vorliegenden Ansatzes eine verbesserte Schaltvorrichtung für ein Bremssystem für ein Fahrzeug, ein verbessertes Bremssystem mit einer Schaltvorrichtung und ein verbessertes Verfahren zum Betreiben einer Schaltvorrichtung zu schaffen.

Diese Aufgabe wird durch eine Schaltvorrichtung mit den Merkmalen des Vorrichtungsanspruchs 1, durch ein Bremssystem nach Anspruch 10, durch ein Verfahren nach Anspruch 11 und durch ein Computerprogramm nach Anspruch 12, sowie durch ein maschinenlesbares Speichermedium nach Anspruch 13 gelöst.

Die mit dem vorgestellten Ansatz erreichbaren Vorteile bestehen darin, Kosten für zusätzliche Controller oder Integrierte Schaltkreise mit Watchdog zur Überwachung jedes einzelnen Steuergeräts eines Bremssystems einzusparen.

Eine Schaltvorrichtung für ein Bremssystem für ein Fahrzeug weist ein Zentralsteuergerät, zumindest ein Subsystemsteuergerät und zusätzlich oder alternativ ein Redundant-Steuergerät und eine Überwachungseinrichtung auf. Das Zentralsteuergerät ist zum Steuern des Bremssystems ausgebildet. Das Subsystemsteuergerät ist mit dem Zentralsteuergerät über einen Datenbus verbunden oder verbindbar und zum Steuern einer Subsystemeinrichtung des Bremssystems ausgebildet. Das Redundant-Steuergerät ist mit dem Zentralsteuergerät über einen weiteren Datenbus verbunden oder verbindbar und zum Steuern eines Redundant-Bremssystems für das Bremssystem ausgebildet. Die Überwachungseinrichtung ist dazu ausgebildet, um ein erstes Prüfsignal von dem Zentralsteuergerät einzulesen, um eine Funktion des Zentralsteuergeräts zu überprüfen und, um ein zweites Prüfsignal von dem Subsystemsteuergerät einzulesen, um eine Funktion des Subsystemsteuergeräts zu überprüfen und zusätzlich oder alternativ, um ein Redundant-Prüfsignal von dem Redundant-Steuergerät einzulesen, um eine Funktion des Redundant-Steuergeräts zu überprüfen.

Bei dem Bremssystem kann es sich um ein elektronisches Bremssystem, kurz "EBS", handeln. Das Zentralsteuergerät, das Subsystemsteuergerät und zusätzlich oder alternativ das Redundant-Steuergerät können je zumindest einen Mikrocontroller aufweisen. Das Redundant-Steuergerät kann funktionsgleich mit dem Zentralsteuergerät ausgebildet sein, beispielsweise auch baugleich. Die Subsystemeinrichtung kann ein beliebiges Bremsmodul des Bremssystems sein, beispielsweise ein elektropneumatisches Modul oder ein Fußbremsmodul. Das Redundant-Bremssystem kann funktionsgleich zu dem Bremssystem ausgebildet sein, beispielsweise baugleich. Der Datenbus kann zumindest eine Datenleitung umfassen. Die Überwachungseinrichtung kann zur Durchführung zumindest einer Watchdogfunktion ausgebildet sein. Die Funktionalität eines "Watchdog" kann dabei derart beschrieben werden, dass ein Counter vorgesehen ist, welcher bei jedem Schritt inkrementiert. Wenn er ein Limit erreicht oder überläuft, wird der Reset des Mikrocontrollers bedient, In der Laufzeit werden nun Befehle integriert, welchen den Watchdog Counter zurücksetzen. Bleibt das Programm hängen wird der Watchdog Counter nichtmehr zurück gesetzt und es kommt zum Reset. In dem hier vorliegenden Fall kann das erste Prüfsignal ein von dem Zentralsteuergerät und zusätzlich oder alternativ das zweite Prüfsignal ein von dem Subsystemsteuergerät bereitgestelltes Signal oder ein auf ein zuvor von der Überwachungseinrichtung gesendetes Abfragesignal an das Zentralsteuergerät oder Subsystemsteuergerät generiertes Antwortsignal sein. Das erste Prüfsignal kann beispielsweise einen Messwert, ein Auswerteergebnis oder Protokoll des Zentralsteuergeräts umfassen. Ebenso kann das zweite Prüfsignal einen Messwert, ein Auswerteergebnis oder Protokoll des Subsystemsteuergeräts und zusätzlich oder alternativ das Redundanz-Prüfsignal einen Messwert, ein Auswerteergebnis oder Protokoll des Redundanz-Steuergeräts umfassen. Die Überwachungseinrichtung kann dazu ausgebildet sein, um den Messwert, das Auswerteergebnis oder Protokoll zu überprüfen oder zu verifizieren, beispielsweise durch einen Vergleich mit einem anderen Messwert, Auswerteergebnis oder Protokoll, um zu erkennen, ob das Zentralsteuergerät und zusätzlich oder alternativ das Subsystemsteuergerät erwartungsgemäß funktionieren.

Vorteilhafterweise ist eine solche Schaltvorrichtung ausgebildet, um mit nur einer Überwachungseinrichtung Funktionen mehrerer Steuergeräte zu überwachen, welche über einen Datenbus miteinander verbunden sind. Dies ermöglicht eine Kosteneinsparung für das Bremssystem und zusätzlich oder alternativ für das Redundant-Bremssystem.

Die Überwachungseinrichtung kann dazu ausgebildet sein, um unter Verwendung des ersten Prüfsignals ein erstes Steuersignal an eine Komponente des Bremssystems auszugeben, wobei das erste Steuersignal die Funktion des Zentralsteuergeräts anzeigt und zusätzlich oder alternativ unter Verwendung des zweiten Prüfsignals ein zweites Steuersignal an eine Komponente des Bremssystems auszugeben, wobei das zweite Steuersignal die Funktion des Subsystemsteuergeräts anzeigt und zusätzlich oder alternativ, um unter Verwendung des Redundant-Prüfsignals ein Redundant-Steuersignal an eine Komponente des Bremssystems auszugeben, wobei das Redundant-Steuersignal die Funktion des Redundant-Steuergeräts anzeigt. So können abhängig von der Funktion des Zentralsteuergeräts, Subsystemsteuergeräts und zusätzlich oder alternativ Redundant-Steuergeräts Handlungen zur Sicherstellung oder Wiederherstellung der Funktion initiiert oder eine Ersatzfunktion aktiviert werden, wenn das Prüfsignal beispielsweise eine Fehlfunktion des Zentralsteuergeräts, Subsystemsteuergeräts und zusätzlich oder alternativ Redundant-Steuergeräts anzeigt. Beispielsweise kann durch das jeweilige Steuersignal ein Neustart oder Abschalten eines defekten Steuergeräts und zusätzlich oder alternativ ein Aktivieren eines anderen Steuergeräts bewirkt werden.

Die Überwachungseinrichtung kann in dem Zentralsteuergerät und zusätzlich oder alternativ dem Subsystemsteuergerät implementiert sein. Beispielsweise kann die Überwachungseinrichtung in einem gemeinsamen Gehäuse mit dem Zentralsteuergerät oder dem Subsystemsteuergerät angeordnet sein. Die Überwachungseinrichtung kann auch auf einem gemeinsamen Hardwarebaustein wie einer Leiterplatte des Zentralsteuergeräts und zusätzlich oder alternativ Subsystemsteuergeräts angeordnet sein.

Es ist weiterhin von Vorteil, wenn die Überwachungseinrichtung gemäß einer Ausführungsform außerhalb von dem Zentralsteuergerät und dem Subsystemsteuergerät angeordnet ist. So kann die Überwachungseinrichtung in ein weiteres Steuergerät des Bremssystems implementiert sein.

Die Überwachungseinrichtung kann gemäß einer Ausführungsform in dem Redundant-Steuergerät implementiert sein. Beispielsweise kann die Überwachungseinrichtung in einem gemeinsamen Gehäuse mit dem Redundant-Steuergerät angeordnet sein. Die Überwachungseinrichtung kann auch auf einem gemeinsamen Hardwarebaustein wie einer Leiterplatte des Redundant-Steuergerät angeordnet sein. Eine Anordnung der Überwachungseinrichtung in oder an dem Redundant-Steuergerät ermöglicht somit vorteilhafterweise eine Überwachung sowohl des Bremssystems als auch des Redundant-Bremssystems.

Gemäß einer Ausführungsform kann das Zentralsteuergerät signaltechnisch mit zumindest einem Sensor und zusätzlich oder alternativ Aktor des Bremssystems und zusätzlich oder alternativ elektrisch mit einem Betriebsspannungsanschluss und zusätzlich oder alternativ einem Masseanschluss verbunden oder verbindbar sein und zusätzlich oder alternativ kann das Redundant-Steuergerät signaltechnisch mit zumindest dem Sensor und zusätzlich oder alternativ Aktor und zusätzlich oder alternativ elektrisch mit einem weiteren Betriebsspannungsanschluss und zusätzlich oder alternativ einem weiteren Masseanschluss verbunden oder verbindbar sein. So können das Zentralsteuergerät und das Redundant-Steuergerät Werte von demselben Sensor und zusätzlich oder alternativ demselben Aktor beziehen, welche dann von der Überwachungseinrichtung überprüft, beispielsweise verglichen, werden können.

Das Zentralsteuergerät kann mit zumindest dem Subsystemsteuergerät über eine elektrisch leitfähige Verbindungseinrichtung verbunden oder verbindbar ist. Dies erlaubt eine elektrische Versorgung der Steuergeräte.

Es ist weiterhin von Vorteil, wenn die Schaltvorrichtung gemäß einer Ausführungsform zumindest ein mit dem Zentralsteuergerät und zusätzlich oder alternativ dem Subsystemsteuergerät über zumindest einen zweiten Datenbus verbundenes oder verbindbares zweites Subsystemsteuergerät zum Steuern einer zweiten Subsystemeinrichtung des Bremssystems aufweist, wobei die Überwachungseinrichtung dazu ausgebildet ist, um ein drittes Prüfsignal von dem zweiten Subsystemsteuergerät einzulesen, um eine Funktion des zweiten Subsystemsteuergeräts zu überprüfen. Die zweite Subsystemeinrichtung kann ebenfalls ein beliebiges Bremsmodul des Bremssystems sein. So können mehrere Subsystemsteuergeräte von der Überwachungseinrichtung überprüft werden, was weitere Kosten einspart.

Das Subsystemsteuergerät kann zum Steuern der Subsystemeinrichtung ausgebildet sein, die als ein elektropneumatisches Modul oder ein Fußbremsmodul des Bremssystems ausgeformt ist. Das elektropneumatische Modul kann ein einkanaliges oder zweikanaliges elektropneumatisches Modul sein.

Ebenso kann das zweite Subsystemsteuergerät zum Steuern der zweiten Subsystemeinrichtung ausgebildet sein, die als ein elektropneumatisches Modul oder ein Fußbremsmodul des Bremssystems ausgeformt ist. Auch hier kann das elektropneumatische Modul ein einkanaliges oder zweikanaliges elektropneumatisches Modul sein.

Ein Bremssystem weist eine der vorangehend beschriebenen Schaltvorrichtungen auf. Das Bremssystem kann ein Redundant-Bremssystem sein oder aufweisen, wobei die Schaltvorrichtung in das Redundant-Bremssystem implementiert sein kann. Ein solches Bremssystem kommt vorteilhafterweise mit nur einer Überwachungseinrichtung aus, welches dennoch alle Steuergeräte des Bremssystems und zusätzlich oder alternativ Redundant-Bremssystems sicher überwachen kann.

Ein Verfahren zum Betreiben einer Schaltvorrichtung für ein Bremssystem für ein Fahrzeug weist einen Schritt des Einlesens und einen Schritt des Ausgebens auf. Im Schritt des Einlesen wird ein erstes Prüfsignal von einem Zentralsteuergerät, das zum Steuern des Bremssystems ausgebildet ist und zusätzlich oder alternativ ein zweites Prüfsignal von einem Subsystemsteuergerät, das mit dem Zentralsteuergerät über einen Datenbus verbunden und zum Steuern einer Subsystemeinrichtung des Bremssystems ausgebildet ist und zusätzlich oder alternativ ein Redundant-Prüfsignal von einem Redundant-Steuergerät, das mit dem Zentralsteuergerät über einen weiteren Datenbus verbunden oder verbindbar und zum Steuern eines Redundant-Bremssystems für das Bremssystem ausgebildet ist, eingelesen. Im Schritt des Ausgebens wird ein erstes Steuersignal an eine Komponente des Bremssystems unter Verwendung des ersten Prüfsignals ausgegeben, wobei das erste Steuersignal die Funktion des Zentralsteuergerät anzeigt und zusätzlich oder alternativ ein zweites Steuersignal an eine Komponente des Bremssystems unter Verwendung des zweiten Prüfsignals ausgegeben, wobei das zweite Steuersignal die Funktion des Subsystemsteuergeräts anzeigt und zusätzlich oder alternativ ein Redundant-Steuersignal an eine Komponente des Bremssystems unter Verwendung des Redundant-Prüfsignals ausgegeben, wobei das Redundant-Steuersignal die Funktion des Redundant-Steuergeräts anzeigt.

Dieses Verfahren kann unter Verwendung der zuvor vorgestellten Überwachungseinrichtung ausführbar sein. Auch durch ein solches Verfahren können die bereits beschriebenen Vorteile der Überwachungseinrichtung technisch einfach und kostengünstig realisiert werden.

Ausführungsbeispiele des hier vorgestellten Ansatzes werden in der nachfolgenden Beschreibung mit Bezug zu den Figuren näher erläutert. Es zeigen:
Fig. 1 eine schematische Darstellung eines Fahrzeugs mit einem Bremssystem mit einer Schaltvorrichtung gemäß einem Ausführungsbeispiel;
Fig. 2 eine schematische Darstellung einer Schaltvorrichtung gemäß einem Ausführungsbeispiel; und
Fig. 3 ein Ablaufdiagramm eines Verfahrens zum Betreiben einer Schaltvorrichtung für ein Bremssystem für ein Fahrzeug gemäß einem Ausführungsbeispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

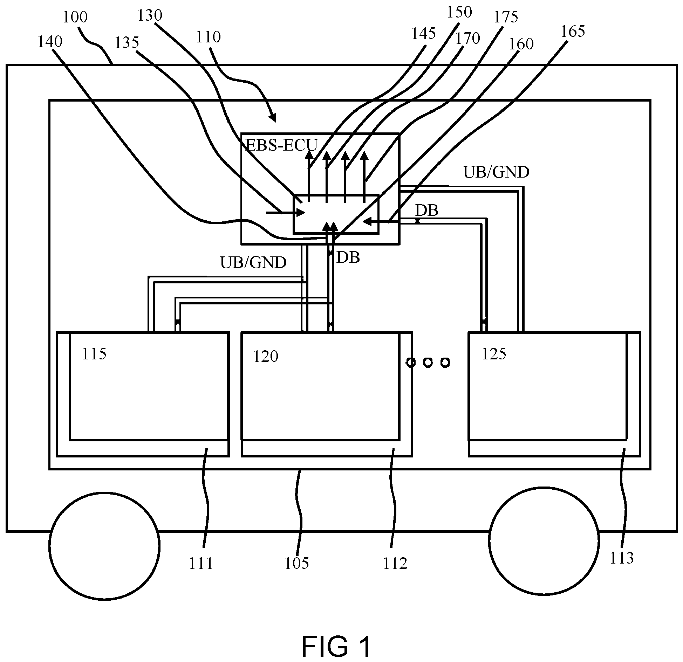

**Fig. 1** zeigt eine schematische Darstellung eines Fahrzeugs 100 mit einem Bremssystem 105 mit einer Schaltvorrichtung 110 gemäß einem Ausführungsbeispiel.

Das Bremssystem 105 ist gemäß diesem Ausführungsbeispiel als ein elektronisches Bremssystem, kurz "EBS", oder gemäß einem alternativen Ausführungsbeispiel als ein Antiblockiersystem, kurz "ABS" ausgeformt. Das Bremssystem 105 weist gemäß diesem Ausführungsbeispiel zumindest eine Subsystemeinrichtung 111, 112, 113 zum Realisieren eines Bremsvorgangs auf. Lediglich beispielhaft weist das Bremssystem 105 gemäß diesem Ausführungsbeispiel drei der Subsystemeinrichtungen 111, 112, 113 auf, welche gemäß diesem Ausführungsbeispiel als ein eineinkanaliges elektropneumatisches Modul, ein zweikanaliges elektropneumatisches Modul und/oder ein Fußbremsmodul ausgeformt sind. Gemäß einem alternativen Ausführungsbeispiel weist das Bremssystem 105 eine beliebige Anzahl an beliebigen weiteren Subsystemeinrichtungen auf.

Die Schaltvorrichtung 110 weist ein Zentralsteuergerät EBS-ECU, zumindest ein Subsystemsteuergerät 115, 120, 125 und eine Überwachungseinrichtung 130 auf. Das Zentralsteuergerät EBS-ECU und jedes der Subsystemsteuergeräte 115, 120, 125 weisen je einen Mikrocontroller auf. Das Zentralsteuergerät EBS-ECU ist zum Steuern des Bremssystems 105 ausgebildet. Das Subsystemsteuergerät 115, 120, 125 ist mit dem Zentralsteuergerät EBS-ECU über einen Datenbus DB verbunden oder verbindbar und zum Steuern der Subsystemeinrichtung 111, 112, 113 des Bremssystems 105 ausgebildet. Die Überwachungseinrichtung 130 ist dazu ausgebildet, um ein erstes Prüfsignal 135 von dem Zentralsteuergerät EBS-ECU einzulesen, um eine Funktion des Zentralsteuergeräts EBS-ECU zu überprüfen und dazu ausgebildet, um ein zweites Prüfsignal 140 von dem Subsystemsteuergerät 115 einzulesen, um eine Funktion des Subsystemsteuergeräts 115 zu überprüfen.

Die Überwachungseinrichtung 130 kann auch als ein "Watchdog" bezeichnet werden und ist gemäß diesem Ausführungsbeispiel zur Durchführung zumindest einer Watchdogfunktion ausgebildet. Das erste Prüfsignal 135 ist gemäß einem Ausführungsbeispiel ein von dem Zentralsteuergerät EBS-ECU und/oder das zweite Prüfsignal 140 ein von dem Subsystemsteuergerät 115 bereitgestelltes Signal oder ist gemäß einem alternativen Ausführungsbeispiel ein auf ein zuvor von der Überwachungseinrichtung 130 gesendetes Abfragesignal an das Zentralsteuergerät EBS-ECU oder Subsystemsteuergerät 115 generiertes Antwortsignal. Gemäß diesem Ausführungsbeispiel umfasst das erste Prüfsignal 135 einen Messwert, ein Auswerteergebnis oder Protokoll des Zentralsteuergeräts EBS-ECU. Ebenso umfasst das zweite Prüfsignal 140 gemäß diesem Ausführungsbeispiel einen Messwert, ein Auswerteergebnis oder Protokoll des Subsystemsteuergeräts 115. Die Überwachungseinrichtung 130 ist gemäß diesem Ausführungsbeispiel dazu ausgebildet, um den Messwert, das Auswerteergebnis oder Protokoll zu überprüfen oder zu verifizieren, beispielsweise durch einen Vergleich mit einem anderen Messwert, Auswerteergebnis oder Protokoll, um zu erkennen, ob das Zentralsteuergerät EBS-ECU und/oder das Subsystemsteuergerät 115 erwartungsgemäß funktionieren.

Lediglich beispielhaft ist die Überwachungseinrichtung 130 gemäß diesem Ausführungsbeispiel in dem Zentralsteuergerät EBS-ECU und/oder gemäß einem alternativen Ausführungsbeispiel in einem der Subsystemsteuergeräte 115, 120, 125 implementiert. Gemäß diesem Ausführungsbeispiel ist die Überwachungseinrichtung 130 in einem gemeinsamen Gehäuse mit dem Zentralsteuergerät EBS-ECU oder gemäß dem alternativen Ausführungsbeispiel in einem gemeinsamen Gehäuse mit dem Subsystemsteuergerät 115, 120, 125 angeordnet. Die Überwachungseinrichtung 130 ist hierbei gemäß diesem Ausführungsbeispiel auf einem gemeinsamen Hardwarebaustein wie einer Leiterplatte des Zentralsteuergeräts EBS-ECU und/oder Subsystemsteuergeräts 115,120, 125 angeordnet.

Die Überwachungseinrichtung 130 ist gemäß diesem Ausführungsbeispiel ferner dazu ausgebildet, um unter Verwendung des ersten Prüfsignals 135 ein erstes Steuersignal 145 an eine Komponente des Bremssystems 105 auszugeben, das die Funktion des Zentralsteuergeräts EBS-ECU anzeigt und/oder unter Verwendung des zweiten Prüfsignals 140 ein zweites Steuersignal 150 an eine Komponente des Bremssystems 105 auszugeben, das die Funktion des Subsystemsteuergeräts 115 anzeigt.

Die Schaltvorrichtung 110 weist gemäß diesem Ausführungsbeispiel zumindest ein mit dem Zentralsteuergerät EBS-ECU und/oder dem Subsystemsteuergerät 120 über zumindest einen zweiten Datenbus DB verbundenes oder verbindbares zweites Subsystemsteuergerät 120 zum Steuern der zweiten Subsystemeinrichtung 112 des Bremssystems 105 auf, wobei die Überwachungseinrichtung 130 dazu ausgebildet ist, um ein drittes Prüfsignal 160 von dem zweiten Subsystemsteuergerät 120 einzulesen, um eine Funktion des zweiten Subsystemsteuergeräts 120 zu überprüfen. Die Schaltvorrichtung 110 weist gemäß diesem Ausführungsbeispiel zumindest ein mit dem Zentralsteuergerät EBS-ECU und/oder dem Subsystemsteuergerät 120 über zumindest einen dritten Datenbus DB verbundenes oder verbindbares drittes Subsystemsteuergerät 125 zum Steuern der dritten Subsystemeinrichtung 113 des Bremssystems 105 auf, wobei die Überwachungseinrichtung 130 dazu ausgebildet ist, um ein viertes Prüfsignal 165 von dem dritten Subsystemsteuergerät 125 einzulesen, um eine Funktion des dritten Subsystemsteuergeräts 125 zu überprüfen. Die Überwachungseinrichtung 130 ist gemäß diesem Ausführungsbeispiel dazu ausgebildet, um unter Verwendung des dritten Prüfsignals 160 ein drittes Steuersignal 170 an eine Komponente des Bremssystems 105 auszugeben, das die Funktion des zweiten Subsystemsteuergeräts 120 anzeigt und/oder unter Verwendung des vierten Prüfsignals 165 ein viertes Steuersignal 175 an eine Komponente des Bremssystems 105 auszugeben, das die Funktion des dritten Subsystemsteuergeräts 125 anzeigt.

Das Zentralsteuergerät EBS-ECU ist gemäß diesem Ausführungsbeispiel mit zumindest dem Subsystemsteuergerät 115, 120, 125 über eine elektrisch leitfähige Verbindungseinrichtung UB/GND verbunden oder verbindbar.

Die hier vorgestellte Schaltvorrichtung 110 realisiert eine ISO26262-Konformität mittels zentralem Watchdog für ein verteiltes elektrisches System. Die Schaltvorrichtung 110 optimiert hierbei vorteilhafterweise eine eigene Überwachungsfunktion eines Steuergerätes EBS-ECU, 115, 120, 125, welches mit anderen Steuergeräten EBS-ECU, 115, 120, 125 in einem System über Datenleitungen, hier über Datenbusse DB, kommunizieren kann. Grundsätzlich werden Steuergeräte EBS-ECU, 115, 120, 125 aktuell nach den Vorgaben der Funktionalen Sicherheit ISO26262-2 entwickelt. Hierbei ist eine Überwachung des internen Mikrocontrollers des Steuergeräts EBS-ECU, 115, 120, 125 über eine zweite Instanz notwendig. Diese zweite Instanz wird durch die Überwachungseinrichtung 130 realisiert, welche gemäß einem Ausführungsbeispiel mittels eines "Handshake"-Signals eine Operation freigibt oder Berechnungen verifiziert, indem sie die gleiche Aufgabe des internen Mikrocontrollers berechnet, wobei ein Ergebnis des internen Mikrocontrollers gemäß einem Ausführungsbeispiel mit einem Ergebnis der Überwachungseinrichtung 130 verglichen und dann entsprechend freigegeben wird. Die Steuersignale 145, 150, 170, 175 können derartige "Handshake"-Signale sein.

Ein zweiter Controller, im Folgenden auch als "µC" bezeichnet, oder ein integrierter Schaltkreis, kurz "IC" mit integriertem Watchdog pro Steuergerät EBS-ECU, 115, 120, 125 zur Durchführung einer derartigen Überwachungsfunktion ist dank der Überwachungseinrichtung 130 vorteilhafterweise nicht notwendig. Die Schaltvorrichtung 110 ermöglicht es somit, hohe Kosten für entweder zumindest einen zweiten Controller oder einen IC mit Watchdog einzusparen.

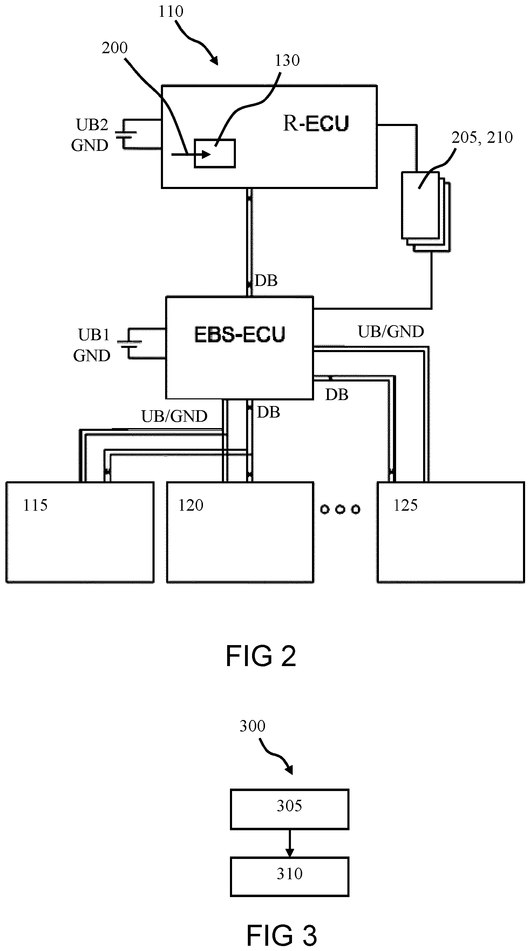

Um die Überwachungsfunktion in dem Bremssystemen 105 zu optimieren, ist bei der hier vorgestellten Schaltvorrichtung 110 eine Watchdog-Funktionalität in das Zentralsteuergerät EBS-ECU implementiert, wobei die Subsystemsteuergeräte 115, 120, 125 der Subsystemeinrichtungen 111, 112, 113 auf die Watchdog-Funktionalität zurückgreifen. Dies ist möglich, da diese im ständigen Austausch von Daten über den Datenbus DB, hier CAN-BUS (Controller Area Network-Bus), stehen. Gemäß einem alternativen Ausführungsbeispiel ist die Watchdog-Funktionalität an eine der angehängten Subsystemeinrichtungen 111, 112, 113 oder ein Redundanzsystem übernommen, wie es in Fig. 2 beschrieben ist. In jedem Fall kann somit der Baustein IC und/oder Controller, welcher die Watchdog-Funktionen abbildet, aus einem oder mehreren Steuergeräten EBS-ECU, 115, 120, 125 entfallen.

**Fig. 2** zeigt eine schematische Darstellung einer Schaltvorrichtung 110 gemäß einem Ausführungsbeispiel. Dabei kann es sich die anhand von Fig. 1 beschriebene Schaltvorrichtung 110 handeln, mit dem Unterschied, dass die Überwachungseinrichtung 130 gemäß diesem Ausführungsbeispiel außerhalb von dem Zentralsteuergerät EBS-ECU und dem zumindest einen Subsystemsteuergerät 115, 120, 125 angeordnet ist.

Die Schaltvorrichtung 110 weist gemäß diesem Ausführungsbeispiel zusätzlich oder alternativ zu dem zumindest einen oder den Subsystemsteuergeräten 115, 120, 125 ein Redundant-Steuergerät R-ECU auf, in das die Überwachungseinrichtung 130 lediglich beispielhaft gemäß diesem Ausführungsbeispiel implementiert ist. Gemäß einem alternativen Ausführungsbeispiel ist die Überwachungseinrichtung 130 wie in Fig. 1 beschrieben in das Zentralsteuergerät EBS-ECU. Das Redundant-Steuergerät R-ECU ist über einen weiteren Datenbus DB mit dem Zentralsteuergerät EBS-ECU verbunden oder verbindbar und zum Steuern eines baugleichen oder bauähnlichen Redundant-Bremssystems für das Bremssystem oder einer elektronischen Parkbremse ausgebildet. Gemäß einem Ausführungsbeispiel ist das Redundant-Steuergerät R-ECU funktionsgleich mit dem Zentralsteuergerät EBS-ECU ausgebildet.

Gemäß diesem Ausführungsbeispiel ist die Überwachungseinrichtung 130 dazu ausgebildet, um ein Redundant-Prüfsignal 200 von dem Redundant-Steuergerät R-ECU einzulesen, um eine Funktion des Redundant-Steuergeräts R-ECU zu überprüfen. Die Überwachungseinrichtung 130 ist gemäß diesem Ausführungsbeispiel dazu ausgebildet, um unter Verwendung des Redundant-Prüfsignals 200 ein Redundant-Steuersignal an eine Komponente des Bremssystems auszugeben, das die Funktion des Redundant-Steuergeräts R-ECU anzeigt. Die Überwachungseinrichtung 130 ist ferner gemäß diesem Ausführungsbeispiel dazu ausgebildet, um das erste, zweite, dritte und/oder vierte Prüfsignal über den weiteren Datenbus DB einzulesen.

Das Zentralsteuergerät EBS-ECU ist gemäß diesem Ausführungsbeispiel signaltechnisch mit zumindest einem Sensor 205 und/oder Aktor 210 des Bremssystems und/oder elektrisch mit einem Betriebsspannungsanschluss UB1 und/oder einem Masseanschluss GND verbunden oder verbindbar. Das Redundant-Steuergerät R-ECU ist gemäß diesem Ausführungsbeispiel ebenfalls signaltechnisch mit zumindest dem Sensor 205 und/oder Aktor 210 und/oder elektrisch mit einem weiteren Betriebsspannungsanschluss UB2 und/oder einem weiteren Masseanschluss GND verbunden oder verbindbar.

Zur Realisierung einer Redundanz für Systeme, wie zum Beispiel das elektrische Bremssystem EBS oder ABS, können diese Systeme mehrfach im Fahrzeug platziert werden. Eine andere Möglichkeit ist, das System mit ähnlichen Teilsystemen, welche die Funktionalität abbilden können, zu ergänzen. Ein Beispiel dafür ist ein EBS mit einer elektronischen Parkbremse, kurz "EPB", zu koppeln. Im Fehlerfall wird das fehlerhafte System abgeschaltet und das zweite fehlerfreie System übernimmt dann die Aufgabe und stellt so die Redundanz her. Diese beiden Systeme sind voneinander autark. Sie sind jeweils nach dem Grundsatz der Funktionalen Sicherheit entwickelt und besitzen somit eine umfangreiche Eigenüberwachung. Beide Systeme sind mittels Bus-System sowie gemeinsam genutzter Aktuatoren miteinander verbunden und dienen zum Austausch von Zuständen und Daten.

Eine Mehrfachplatzierung von Steuergeräten oder Systemen in Fahrzeugen verursacht hohe Kosten. Dieser Ansatz beschreibt eine Möglichkeit, die Kosten für ein bereits bestehendes System mit Redundanzsystem zu senken. Gemäß diesem Ausführungsbeispiel ist das Prinzip des "Shared"-Watchdog auf ein System übertragen, welches redundant ausgelegt ist.

In diesem Ausführungsbeispiel ist die Überwachungsfunktion durch das Redundant-Steuergerät R-ECU übernommen. Dieses ist gemäß diesem Ausführungsbeispiel mit dem Zentralsteuergerät EBS-ECU mittels Datenbusse DB sowie gemeinsam genutzter Aktuatoren 205 und Sensoren 210 verbunden, welche gemäß einem Ausführungsbeispiel zur Synchronisation verwendet werden. Es kann zum Beispiel über das gemeinsam genutzte PCV-Ventil mittels Testpulse ein Protokoll von dem Zentralsteuergerät EBS-ECU zum Redundant-Steuergerät R-ECU übertragen werden, welches mittels Datenbus DB kontrolliert wird. Dieses kann auch als "Shared"-Watchdog verwendet werden.

**Fig. 3** zeigt ein Ablaufdiagramm eines Verfahrens 300 zum Betreiben einer Schaltvorrichtung für ein Bremssystem für ein Fahrzeug gemäß einem Ausführungsbeispiel. Dieses Verfahren 300 ist von der in einer der Figuren 1 oder 2 beschriebenen Schaltvorrichtungen ansteuerbar oder ausführbar. Speziell kann in diesem Zusammanhang auch die Möglichkeit vorgesehen sein, einen Reset zumindest einer der Schaltvorrichtungen herbeizuführen.

Das Verfahren 300 weist einen Schritt 305 des Einlesens und einen Schritt 310 des Ausgebens auf. Im Schritt 305 des Einlesen wird ein erstes Prüfsignal von einem Zentralsteuergerät, das zum Steuern des Bremssystems ausgebildet ist und/oder ein zweites Prüfsignal von einem Subsystemsteuergerät, das mit dem Zentralsteuergerät über einen Datenbus verbunden und zum Steuern einer Subsystemeinrichtung des Bremssystems ausgebildet ist, und/oder ein Redundant-Prüfsignal von einem Redundant-Steuergerät, das mit dem Zentralsteuergerät über einen weiteren Datenbus verbunden und zum Steuern eines Redundant-Bremssystems für das Bremssystem ausgebildet ist, eingelesen. Im Schritt 310 des Ausgebens wird ein erstes Steuersignal an eine Komponente des Bremssystems unter Verwendung des ersten Prüfsignals ausgegeben, wobei das erste Steuersignal die Funktion des Zentralsteuergerät anzeigt und/oder ein zweites Steuersignal an eine Komponente des Bremssystems unter Verwendung des zweiten Prüfsignals ausgegeben, wobei das zweite Steuersignal die Funktion des Subsystemsteuergeräts anzeigt und/oder ein Redundant-Steuersignal an eine Komponente des Bremssystems unter Verwendung des Redundant-Prüfsignals ausgegeben, wobei das Redundant-Steuersignal die Funktion des Redundant-Steuergeräts anzeigt.

Die hier vorgestellten Verfahrensschritte können wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### BEZUGSZEICHENLISTE

- DB: Datenbus
- EBS-ECU: Zentralsteuergerät
- GND: Masseanschluss
- R-ECU: Redundant-Steuergerät
- UB/GND: elektrisch leitfähige Verbindungseinrichtung
- UB1: Betriebsspannungsanschluss
- UB2: weiterer Betriebsspannungsanschluss

- 100: Fahrzeug
- 105: Bremssystem
- 110: Schaltvorrichtung
- 111: Subsystemeinrichtung
- 112: zweite Subsystemeinrichtung
- 113: dritte Subsystemeinrichtung
- 115: Subsystemsteuergerät
- 120: zweites Subsystemsteuergerät
- 125: drittes Subsystemsteuergerät
- 130: Überwachungseinrichtung
- 135: erstes Prüfsignal
- 140: zweites Prüfsignal
- 145: erstes Steuersignal
- 150: zweites Steuersignal
- 160: drittes Prüfsignal
- 165: viertes Prüfsignal
- 170: drittes Steuersignal
- 175: viertes Steuersignal

- 200: Redundant-Prüfsignal
- 205: Sensor
- 210: Aktor
- 300: Verfahren zum Betreiben einer Schaltvorrichtung für ein Bremssystem für ein Fahrzeug
- 305: Schritt des Einlesens
- 310: Schritt des Ausgebens

## Patentansprüche

1. Schaltvorrichtung (110) für ein Bremssystem (105) für ein Fahrzeug (100), wobei die Schaltvorrichtung (110) die folgenden Merkmale aufweist:
ein Zentralsteuergerät (EBS-ECU) zum Steuern des Bremssystems (105),
zumindest ein mit dem Zentralsteuergerät (EBS-ECU) über einen weiteren Datenbus (DB) verbundenes oder verbindbares Redundant-Steuergerät (R-ECU) zum Steuern eines Redundant-Bremssystems für das Bremssystem (105),
**gekennzeichnet durch**
eine Überwachungseinrichtung (130), die dazu ausgebildet ist um ein Redundant-Prüfsignal (200) von dem Redundant-Steuergerät (R-ECU) einzulesen, um eine Funktion des Redundant-Steuergeräts (R-ECU) zu prüfen.

2. Schaltvorrichtung (110) gemäß Anspruch 1, die ferner zumindest ein mit dem Zentralsteuergerät (EBS-ECU) über einen Datenbus (DB) verbundenes oder verbindbares Subsystemsteuergerät (115) zum Steuern einer Subsystemeinrichtung (111) des Bremssystems (105) aufweist, wobei die Überwachungseinrichtung (130) dazu ausgebildet ist, um ein erstes Prüfsignal (135) von dem Zentralsteuergerät (EBS-ECU) einzulesen, um eine Funktion des Zentralsteuergeräts (EBS-ECU) zu überprüfen und die dazu ausgebildet ist, um ein zweites Prüfsignal (140) von dem Subsystemsteuergerät (115) einzulesen, um eine Funktion des Subsystemsteuergeräts (115) zu überprüfen und wobei die Überwachungseinrichtung (130) dazu ausgebildet ist, um unter Verwendung des ersten Prüfsignals (135) ein erstes Steuersignal (145) an eine Komponente des Bremssystems (105) auszugeben, wobei das erste Steuersignal (145) die Funktion des Zentralsteuergeräts (EBS-ECU) anzeigt und/oder unter Verwendung des zweiten Prüfsignals (140) ein zweites Steuersignal (150) an eine Komponente des Bremssystems (105) auszugeben, wobei das zweite Steuersignal (150) die Funktion des Subsystemsteuergeräts (115) anzeigt und/oder um unter Verwendung des Redundant-Prüfsignals (200) ein Redundant-Steuersignal an eine Komponente des Bremssystems (105) auszugeben, wobei das Redundant-Steuersignal die Funktion des Redundant-Steuergeräts (R-ECU) anzeigt.

3. Schaltvorrichtung (110) gemäß Anspruch 2, bei der die Überwachungseinrichtung (130) in dem Zentralsteuergerät (EBS-ECU) und/oder dem Subsystemsteuergerät (115) implementiert ist.

4. Schaltvorrichtung (110) gemäß einem der Ansprüche 2 bis 3, bei der die Überwachungseinrichtung (130) außerhalb von dem Zentralsteuergerät (EBS-ECU) und dem Subsystemsteuergerät (115) angeordnet ist.

5. Schaltvorrichtung (110) gemäß einem der vorangegangenen Ansprüche, bei der die Überwachungseinrichtung (130) in dem Redundant-Steuergerät (R-ECU) implementiert ist.

6. Schaltvorrichtung (110) gemäß einem der vorangegangenen Ansprüche, bei der das Zentralsteuergerät (EBS-ECU) signaltechnisch mit zumindest einem Sensor (205) und/oder Aktor (210) des Bremssystems (105) und/oder elektrisch mit einem Betriebsspannungsanschluss (UB1) und/oder einem Masseanschluss (GND) verbunden oder verbindbar ist und/oder das Redundant-Steuergerät (R-ECU) signaltechnisch mit zumindest dem Sensor (205) und/oder Aktor (205) und/oder elektrisch mit einem weiteren Betriebsspannungsanschluss (UB2) und/oder einem weiteren Masseanschluss (GND) verbunden oder verbindbar ist.

7. Schaltvorrichtung (110) gemäß einem der vorangegangenen Ansprüche, bei der das Zentralsteuergerät (EBS-ECU) mit zumindest dem Subsystemsteuergerät (115) über eine elektrisch leitfähige Verbindungseinrichtung (UB/GND) verbunden oder verbindbar ist.

8. Schaltvorrichtung (110) gemäß einem der vorangegangenen Ansprüche, mit zumindest einem mit dem Zentralsteuergerät (EBS-ECU) und/oder dem Subsystemsteuergerät (115) über zumindest einen zweiten Datenbus (DB) verbundenen oder verbindbaren zweiten Subsystemsteuergerät (120) zum Steuern einer zweiten Subsystemeinrichtung (112) des Bremssystems (105), wobei die Überwachungseinrichtung (130) dazu ausgebildet ist, um ein drittes Prüfsignal (160) von dem zweiten Subsystemsteuergerät (120) einzulesen, um eine Funktion des zweiten Subsystemsteuergeräts (120) zu überprüfen.

9. Schaltvorrichtung (110) gemäß einem der vorangegangenen Ansprüche, bei der das Subsystemsteuergerät (115) zum Steuern der Subsystemeinrichtung (111) ausgebildet ist, die als ein elektropneumatisches Modul oder ein Fußbremsmodul des Bremssystems (105) ausgeformt ist.

10. Bremssystem (105) mit einer Schaltvorrichtung (110) gemäß einem der vorangegangenen Ansprüche.

11. Verfahren (300) zum Betreiben einer Schaltvorrichtung (110) für ein Bremssystem (105) für ein Fahrzeug (100), wobei das Verfahren (300) die folgenden Schritte aufweist:
Einlesen (305) eines Redundant-Prüfsignals (200) von einem Redundant-Steuergerät (R-ECU), das mit einem Zentralsteuergerät (EBS-ECU) über einen weiteren Datenbus (DB) verbunden oder verbindbar und zum Steuern eines Redundant-Bremssystems für das Bremssystem (105) ausgebildet ist; und
Ausgeben (310) eines Redundant-Steuersignals an eine Komponente des Bremssystems (105) unter Verwendung des Redundant-Prüfsignals (200), wobei das Redundant-Steuersignal die Funktion des Redundant-Steuergeräts (R-ECU) anzeigt.

12. Computerprogramm, das dazu eingerichtet ist, das Verfahren (300) gemäß Anspruch 11 auszuführen und/oder anzusteuern.

13. Maschinenlesbares Speichermedium, auf dem das Computerprogramm nach Anspruch 12 gespeichert ist.

## Claims

1. Switching device (110) for a brake system (105) for a vehicle (100), wherein the switching device (110) has the following features:
a central control unit (EBS-ECU) for controlling the brake system (105),
at least one redundant control unit (R-ECU), which is or can be connected to the central control unit (EBS-ECU) via a further data bus (DB), for controlling a redundant brake system for the brake system (105),
**characterized in that**
a monitoring apparatus (130) is designed to read a redundant test signal (200) from the redundant control unit (R-ECU), in order to test a function of the redundant control unit (R-ECU).

2. Switching device (110) according to claim 1, which also has at least one subsystem control unit (115), which is or can be connected to the central control unit (EBS-ECU) via a data bus (DB), for controlling a subsystem apparatus (111) of the brake system (105), wherein the monitoring apparatus (130) is designed to read a first test signal (135) from the central control unit (EBS-ECU), in order to test a function of the central control unit (EBS-ECU) and which is designed to read a second test signal (140) from the subsystem control unit (115), in order to test a function of the subsystem control unit (115) and wherein the monitoring apparatus (130) is designed, using the first test signal (135), to output a first control signal (145) to a component of the brake system (105), wherein the first control signal (145) indicates the function of the central control unit (EBS-ECU) and/or, using the second test signal (140), to output a second control signal (150) to a component of the brake system (105), wherein the second control signal (150) indicates the function of the subsystem control unit (115) and/or, using the redundant test signal (200), to output a redundant control signal to a component of the brake system (105), wherein the redundant control signal indicates the function of the redundant control unit (R-ECU).

3. Switching device (110) according to claim 2, wherein the monitoring apparatus (130) is implemented in the central control unit (EBS-ECU) and/or the subsystem control unit (115).

4. Switching device (110) according to any one of claims 2 to 3, wherein the monitoring apparatus (130) is arranged outside the central control unit (EBS-ECU) and the subsystem control unit (115).

5. Switching device (110) according to any one of the preceding claims, wherein the monitoring apparatus (130) is implemented in the redundant control unit (R-ECU).

6. Switching device (110) according to any one of the preceding claims, wherein the central control unit (EBS-ECU) is or can be connecting for signalling to at least one sensor (205) and/or actuator (210) of the brake system (105) and/or electrically to an operating voltage terminal (UB1) and/or a ground terminal (GND) and/or the redundant control unit (R-ECU) is or can be connected for signalling to at least the sensor (205) and/or actuator (205) and/or electrically to a further operating voltage terminal (UB2) and/or a further ground terminal (GND).

7. Switching device (110) according to any one of the preceding claims, wherein the central control unit (EBS-ECU) is or can be connected to at least the subsystem control unit (115) via an electrically conductive connecting apparatus(UB/GND).

8. Switching device (110) according to any one of the preceding claims, with at least a second subsystem control unit (120), which is or can be connected to the central control unit (EBS-ECU) and/or the subsystem control unit (115) via at least a second data bus (DB), for controlling a second subsystem apparatus (112) of the brake system (105), wherein the monitoring apparatus (130) is designed to read a third test signal (160) from the second subsystem control unit (120), in order to test a function of the second subsystem control unit (120).

9. Switching device (110) according to any one of the preceding claims, wherein the subsystem control unit (115) is designed to control the subsystem apparatus (111), which is formed as an electropneumatic module or a foot brake module of the brake system (105).

10. Brake system (105) with a switching device (110) according to any one of the preceding claims.

11. Method (300) for operating a switching device (110) for a brake system (105) for a vehicle (100), wherein the method (300) comprises the following steps:
Reading (305) a redundant test signal (200) from a redundant control unit (R-ECU), which is or can be connected to a central control unit (EBS-ECU) via a further data bus (DB) and is designed to control a redundant brake system for the brake system (105), and
Outputting (310) a redundant control signal to a component of the brake system (105) using the redundant test signal (200), wherein the redundant control signal indicates the function of the redundant control unit (R-ECU).

12. Computer program, which is configured to execute and/or control the method (300) according to claim 11.

13. Machine-readable storage medium, on which the computer program according to claim 12 is stored.

## Revendications

1. Dispositif de commutation (110) pour un système de freinage (105) pour un véhicule (100), dans lequel le dispositif de commutation (110) présente les caractéristiques suivantes :
un appareil de commande central (EBS-ECU) pour commander le système de freinage (105),
au moins un appareil de commande redondant (R-ECU) connecté ou pouvant être connecté à l'appareil de commande central (EBS-ECU) par l'intermédiaire d'un bus de données supplémentaire (DB) pour commander un système de freinage redondant pour le système de freinage (105),
**caractérisé par**
un appareil de surveillance (130) qui est conçu pour lire un signal de contrôle redondant (200) de l'appareil de commande redondant (R-ECU) pour contrôler un fonctionnement de l'appareil de commande redondant (R-ECU).

2. Dispositif de commutation (110) selon la revendication 1, qui présente en outre au moins un appareil de commande de sous-système (115) connecté ou pouvant être connecté à l'appareil de commande central (EBS-ECU) par l'intermédiaire d'un bus de données (DB) pour commander un appareil de sous-système (111) du système de freinage (105), dans lequel l'appareil de surveillance (130) est conçu pour lire un premier signal de contrôle (135) de l'appareil de commande central (EBS-ECU) pour contrôler un fonctionnement de l'appareil de commande central (EBS-ECU) et qui est conçu pour lire un deuxième signal de contrôle (140) de l'appareil de commande de sous-système (115) pour contrôler un fonctionnement de l'appareil de commande de sous-système (115) et dans lequel l'appareil de surveillance (130) est conçu pour émettre, en utilisant le premier signal de contrôle (135), un premier signal de commande (145) à un composant du système de freinage (105), dans lequel le premier signal de commande (145) indique le fonctionnement de l'appareil de commande central (EBS-ECU), et/ou pour émettre, en utilisant le deuxième signal de contrôle (140), un deuxième signal de commande (150) à un composant du système de freinage (105), dans lequel le deuxième signal de commande (150) indique le fonctionnement de l'appareil de commande de sous-système (115) et/ou pour émettre un signal de commande redondant à un composant du système de freinage (105) en utilisant le signal de contrôle redondant (200), dans lequel le signal de commande redondant indique le fonctionnement de l'appareil de commande redondant (R-ECU).

3. Dispositif de commutation (110) selon la revendication 2, dans lequel l'appareil de surveillance (130) est mis en oeuvre dans l'appareil de commande central (EBS-ECU) et/ou l'appareil de commande de sous-système (115).

4. Dispositif de commutation (110) selon l'une quelconque des revendications 2 à 3, dans lequel l'appareil de surveillance (130) est disposé à l'extérieur de l'appareil de commande central (EBS-ECU) et de l'appareil de commande de sous-système (115).

5. Dispositif de commutation (110) selon l'une quelconque des revendications précédentes, dans lequel l'appareil de surveillance (130) est mis en œuvre dans l'appareil de commande redondant (R-ECU).

6. Dispositif de commutation (110) selon l'une quelconque des revendications précédentes, dans lequel l'appareil de commande central (EBS-ECU) est connecté ou peut être connecté par technologie de signaux à au moins un capteur (205) et/ou un actionneur (210) du système de freinage (105) et/ou électriquement à un raccord de tension de service (UB1) et/ou à un raccord de masse (GND) et/ou l'appareil de commande redondant (R-ECU) est connecté ou peut être connecté par technologie de signaux à au moins le capteur (205) et/ou l'actionneur (205) et/ou électriquement à un raccord de tension de service supplémentaire (UB2) et/ou à un raccord de masse supplémentaire (GND)

7. Dispositif de commutation (110) selon l'une quelconque des revendications précédentes, dans lequel l'appareil de commande central (EBS-ECU) est connecté ou peut être connecté à au moins l'appareil de commande de sous-système (115) par l'intermédiaire d'un appareil de connexion électriquement conducteur (UB/GND).

8. Dispositif de commutation (110) selon l'une quelconque des revendications précédentes, avec au moins un deuxième appareil de commande de sous-système (120) connecté ou pouvant être connecté à l'appareil de commande central (EBS-ECU) et/ou à l'appareil de commande de sous-système (115) par l'intermédiaire d'au moins un deuxième bus de données (DB) pour commander un deuxième appareil de sous-système (112) du système de freinage (105), dans lequel l'appareil de surveillance (130) est conçu pour lire un troisième signal de contrôle (160) du deuxième appareil de commande de sous-système (120) pour contrôler un fonctionnement du deuxième appareil de commande de sous-système (120).

9. Dispositif de commutation (110) selon l'une quelconque des revendications précédentes, dans lequel le contrôleur de sous-système (115) est configuré pour commander l'appareil de sous-système (111) qui est formé en tant que module électropneumatique ou un module de frein à pied du système de freinage (105).

10. Système de freinage (105) avec un dispositif de commutation (110) selon l'une quelconque des revendications précédentes.

11. Procédé (300) de fonctionnement d'un dispositif de commutation (110) pour un système de freinage (105) pour un véhicule (100), dans lequel le procédé (300) présente les étapes suivantes :
lecture (305) d'un signal de contrôle redondant (200) d'un appareil de commande redondant (R-ECU) qui est connecté ou peut être connecté à un appareil de commande central (EBS-ECU) par l'intermédiaire d'un bus de données supplémentaire (DB) et qui est conçu pour commander un système de freinage redondant pour le système de freinage (105) ; et
émission (310) d'un signal de commande redondant à un composant du système de freinage (105) en utilisant le signal de contrôle redondant (200), dans lequel le signal de commande redondant indique le fonctionnement de l'appareil de commande redondant (R-ECU).

12. Programme informatique qui est configuré pour mettre en œuvre et/ou commander le procédé (300) selon la revendication 11.

13. Support de stockage lisible par machine sur lequel le programme informatique selon la revendication 12 est stocké.
